# EUROPÄISCHE PATENTSCHRIFT

(11) **EP 3 406 471 B1**
(45) Veröffentlichungstag und Bekanntmachung des Hinweises auf die Patenterteilung: **06.04.2022**
(21) Anmeldenummer: 18173521.8
(22) Anmeldetag: 22.05.2018
(51) Int. Cl.: B60J 7/10, B60P 7/04, B60J 7/06, B62D 33/04

(54) **NUTZFAHRZEUGAUFBAU, INSBESONDERE PLANENAUFBAU SOWIE NUTZFAHRZEUG**
COMMERCIAL VEHICLE STRUCTURE, IN PARTICULAR CANVAS STRUCTURE AND COMMERCIAL VEHICLE
STRUCTURE DE VÉHICULE UTILITAIRE, NOTAMMENT LA STRUCTURE DE BÂCHE ET VÉHICULE UTILITAIRE

(30) Priorität: 23.05.2017 DE 102017111235
(43) Veröffentlichungstag der Anmeldung: 28.11.2018
(73) Patentinhaber: Kögel Trailer GmbH, 89349 Burtenbach (DE)
(72) Erfinder: STEMPFLE, Paul, 89356 Haldenwang (DE); BROLL, Tobias, 86381 Krumbach-Billenhausen (DE); KALISCHKO, Thomas, 86470 Thannhausen (DE); BIELOHLAWEK, Daniel, 86444 Affing (DE); SCHMUTZ-EGGERT, Gerhard, 89278 Nersingen (DE)
(74) Vertreter: Kilchert, Jochen

(56) Entgegenhaltungen:
- DE-A1-102013 211 131
- DE-U1-202006 010 594
- DE-U1-202008 008 651

## Beschreibung

Die Erfindung betrifft einen Nutzfahrzeugaufbau, insbesondere Planenaufbau, nach dem Oberbegriff des Patentanspruchs 1. Ferner betrifft die Erfindung ein Nutzfahrzeug mit einem solchen Nutzfahrzeugaufbau. Ein Nutzfahrzeugaufbau der eingangs genannten Art ist beispielsweise aus DE 20 2006 010 594 U1 bekannt.

An die Festigkeit von Nutzfahrzeugaufbauten werden hohe Anforderungen gestellt. Insbesondere die gesetzlichen Vorgaben für die Aufbaufestigkeit werden nach und nach verschärft. Ziel ist eine besonders hohe Verkehrssicherheit und Ladungssicherheit. In standardisierten Tests wird dabei ermittelt, welche Auslenkung einer Seitenplane eines Planenaufbaus sich einstellt, wenn eine simulierte Ladungskraft von innen gegen die Seitenwand aufgebracht wird. Die maximal zulässige Auslenkung ist regulatorisch begrenzt.

Einen wesentlichen Beitrag zur Aufbausteifigkeit leistet das Dach eines Nutzfahrzeugaufbaus. Eine Verstärkung des Daches zur Erhöhung der Aufbausteifigkeit ist jedoch insbesondere bei Fahrzeugen mit einem Schiebeverdeck schwer realisierbar. Insbesondere soll eine Versteifung des Fahrzeugdaches nicht zu einer Reduktion der Zuladung führen und außerdem die Funktionalität des Schiebeverdecks gut beibehalten werden können.

DE 20 2011 050 437 U1 schlägt dazu vor, gurtartige Aussteifungselemente mit der Dachplane zu verbinden. Die gurtartigen Aussteifungselemente sind fest mit der Dachplane verbunden und bilden einerseits einen um die Dachplane umlaufenden Rahmen und andererseits ein innerhalb dieses Rahmens geführtes Fachwerk. Damit ist die Aufbausteifigkeit signifikant erhöht, da die sich zumindest teilweise quer zur Dachplanenlängsrichtung erstreckenden Aussteifungselemente Zugkräfte aufnehmen und so die Steifigkeit des Aufbaus insgesamt erhöhen.

In der Praxis hat sich jedoch gezeigt, dass insbesondere durch den umlaufenden Rahmen, den die gurtartigen Aussteifungselemente bilden, die Faltbarkeit eines Schiebeverdecks erschwert ist. Dies führt zu einem erhöhten Kraftaufwand beim Öffnen des Schiebeverdecks. Gleichzeitig weist die vorbekannte Dachplane relativ hohe Fertigungstoleranzen auf, die sich wiederum negativ auf die Aufbausteifigkeit auswirken können. Zwar werden mit der vorbekannten Lösung die gesetzlich geforderten Aufbausteifigkeiten noch erreicht, die genannten Nachteile führen jedoch dazu, dass Kunden sich zurückhaltend für eine solche Dachplane entscheiden.

Die eingangs genannte DE 20 2006 101 594 U1 offenbart eine Dachplanenanordnung mit einer Dachplane, die durch Drahtseile ausgesteift ist. Die Dachplane ist mittels Schrauben an den Dachspriegeln festgelegt. Um eine Abdichtung des Befestigungsbereichs zu erreichen, ist ein Abdichtungsplanenstreifen seitlich auf die Dachplane geklebt, der die Schrauben überdeckt.

Aufgabe der Erfindung ist es vor diesem Hintergrund, einen Nutzfahrzeugaufbau anzugeben, der die Vorteile der bisherigen Lösung beibehält, gleichzeitig jedoch deren Nachteile ausgleicht. Insbesondere ist es Aufgabe der Erfindung, einen Nutzfahrzeugaufbau anzugeben, dessen Schiebeverdeck eine ausreichende Aufbausteifigkeit gewährleistet und gleichzeitig einen hohen Funktionskomfort und eine hohe Dichtigkeit aufweist. Ferner ist es Aufgabe der Erfindung, ein Nutzfahrzeug mit einer solchen Dachplaneneinheit anzugeben.

Erfindungsgemäß wird diese Aufgabe im Hinblick auf den Nutzfahrzeugaufbau durch den Gegenstand des Patentanspruchs 1 und im Hinblick auf das Nutzfahrzeug durch den Gegenstand des Patentanspruchs 9 gelöst.

So beruht die Erfindung auf dem Gedanken, einen Nutzfahrzeugaufbau, insbesondere Planenaufbau, mit einem Schiebeverdeck anzugeben, das eine an Dachspriegeln befestigte Dachplane und wenigstens ein gurtartiges Aussteifungselement aufweist, das sich zumindest teilweise quer zu einer Planenlängsrichtung erstreckt. Das Aussteifungselement ist abschnittsweise mit der Dachplane verbunden und weist wenigstens ein freies Längsende auf, das an einem Dachspriegel befestigt ist. Ein Randbereich der Dachplane überlappt das freie Längsende des Aussteifungselements lose.

Die Idee bei der Erfindung besteht im Wesentlichen darin, auf den aus dem Stand der Technik bekannten umlaufenden Aussteifungsrahmen zu verzichten. Vielmehr ist vorgesehen, dass das gurtartige Aussteifungselement wenigstens ein freies Längsende aufweist, das lose von der Dachplane überdeckt wird. Das freie Längsende ist mit dem Dachspriegel verbunden. Die Dachplane erstreckt sich über diesen Verbindungsbereich hinweg. Dadurch wird erreicht, dass ohne eine Einschränkung der Aufbaufestigkeit die Funktionalität des Schiebeverdecks verbessert wird. Insbesondere ist die Dachplane an den Faltstellen, insbesondere im Randbereich, flexibler, da keine Materialdopplung besteht. Die Faltung der Dachplane beim Öffnen des Schiebeverdecks erfolgt somit leichter als im Stand der Technik.

Zusätzlich hat sich überraschend gezeigt, dass durch das freie Längsende des Aussteifungselements bei der Montage des Schiebeverdecks eine höhere Spannung auf das Aussteifungselement aufgebracht werden kann. Das Aussteifungselement kann insbesondere sehr straff gespannt werden, bevor es mit dem Dachspriegel verbunden wird. Das reduziert das Spiel innerhalb des Schiebeverdecks und sorgt zusätzlich für eine Verbesserung der Aufbausteifigkeit. Ein weiterer positiver Effekt ergibt sich durch den Randbereich der Dachplane, der das Längsende des Aussteifungselements überdeckt. Der Befestigungsbereich, in welchem das Längsende mit dem Dachspriegel verbunden ist, wird somit von der Dachplane geschützt, was insgesamt zu einer guten Dichtigkeit des Schiebeverdecks beiträgt.

Vorzugsweise ist das Aussteifungselement auf einer Innenseite der Dachplane angeordnet. Damit ist sichergestellt, dass das Aussteifungselement keinen äußeren Witterungseinflüssen ausgesetzt ist, so dass die Funktionalität des Aussteifungselements langfristig erhalten bleibt. Außerdem trägt diese Anordnung des Aussteifungselements zu einer verbesserten Dichtigkeit des Schiebeverdecks bei.

Der Randbereich der Dachplane ist ebenfalls am Dachspriegel befestigt. Erfindungsgemäß erfolgt die Befestigung des Randbereichs der Dachplane weiter außen am Dachspriegel als das freie Längsende des Aussteifungselements. Mit anderen Worten überlappt der Randbereich der Dachplane das freie Längsende des Aussteifungselements und ist erst nach dem überlappenden Abschnitt am Dachspriegel befestigt.

Die Befestigung des Randbereichs der Dachplane am Dachspriegel kann insbesondere an einer Außenseite des Dachspriegels erfolgen. Dies dient ebenfalls der Dichtigkeit des Schiebeverdecks bzw. insgesamt des Nutzfahrzeugaufbaus. Insbesondere die Außenseite des Dachspriegels erstreckt sich vorzugsweise senkrecht, so dass beispielsweise Regenwasser an einem Befestigungsmittel, welches den Randbereich der Dachplane mit der Außenseite des Dachspriegels verbindet, vorbeifließen kann. Auf diese Weise ist insbesondere sichergestellt, dass sich keine Durchführungen oder Befestigungsmittelaufnahmen auf einer Oberseite der Dachplane befinden, auf welcher sich gegebenenfalls Wasser sammeln kann. Insgesamt trägt diese Gestaltung somit zu einer erhöhten Dichtigkeit des Nutzfahrzeugaufbaus bei.

Erfindungsgemäß ist das freie Längsende des Aussteifungselements mit einem Befestigungsmittel an der Oberseite des Dachspriegels fixiert. Befestigungsmittel im Sinne der vorliegenden Anmeldung können insbesondere Nieten oder Schrauben bzw. eine Kombination aus Schrauben und Muttern sein.

Bei der Erfindung überdeckt der Randbereich der Dachplane das Befestigungsmittel. Wie bereits erwähnt, dient dies insbesondere der Dichtigkeit des Schiebeverdecks bzw. des Nutzfahrzeugaufbaus. Indem das Befestigungsmittel unterhalb der Dachplane angeordnet ist, wird verhindert, dass über die für das Befestigungsmittel notwendige Öffnung Feuchtigkeit in den Nutzfahrzeugaufbau eindringt.

Bei einer bevorzugten Ausführungsform des erfindungsgemäßen Nutzfahrzeugaufbaus ist vorgesehen, dass das Aussteifungselement einen Verbindungsbereich aufweist, der sich zwischen zwei freien Längsenden des Aussteifungselements erstreckt und zumindest teilweise, insbesondere abschnittsweise, mittelbar oder unmittelbar mit der Dachplane verbunden ist. Im Wesentlichen kann also vorgesehen sein, dass zwischen den freien Längsenden des Aussteifungselements ein mittlerer Verbindungsbereich vorliegt, der eine Verbindung zur Dachplane herstellt. Der Verbindungsbereich kann dabei zumindest teilweiseunmittelbar, insbesondere stoffschlüssig, mit der Dachplane verbunden sein. Die stoffschlüssige Verbindung kann beispielsweise durch Schweißen oder Kleben erfolgen. Ferner kann vorgesehen sein, dass die Dachplane eine Dachplanentasche aufweist, in welcher der Verbindungsbereich des Aussteifungselements geführt ist. Die Dachplanentasche ist vorzugsweise mit der Dachplane fest verbunden, beispielsweise geklebt, geschweißt und/oder genäht. Das Aussteifungselement kann in der Dachplanentasche frei verschieblich geführt sein. Dennoch erfolgt mittels der Dachplanentasche eine mittelbare Verbindung zwischen dem Aussteifungselement, insbesondere dessen Verbindungsbereich, und der Dachplane. Die über die Dachplanentasche vorstehenden Abschnitte des Aussteifungselements bilden die freien Längsenden, die mit einem gemeinsamen oder jeweils einem Dachspriegel verbunden sind.

Bei einer bevorzugten Ausgestaltung der Erfindung sind mehrere Aussteifungselemente vorgesehen. Die mehreren Aussteifungselemente können sich jeweils zumindest teilweise quer zu einer Längsrichtung der Dachplane erstrecken und sind jeweils separat mit der Dachplane mittelbar oder unmittelbar verbunden. Insbesondere kann vorgesehen sein, dass die mehreren Aussteifungselemente fachwerkartig an der Dachplane angeordnet sind. Dies sorgt für eine effiziente Aussteifung der Dachplane und somit des Schiebeverdecks bzw. des gesamten Nutzfahrzeugaufbaus. Im Allgemeinen kann vorgesehen sein, dass der Randbereich der Dachplane frei von Aussteifungselementen ist. Damit lässt sich der Randbereich leicht knicken, wodurch sich die Faltung der Dachplane beim Öffnen des Schiebeverdecks vergleichsweise leicht einstellt. Insgesamt wird somit die Bedienbarkeit des Schiebeverdecks erheblich verbessert.

Im Rahmen der vorliegenden Anmeldung wird außerdem ein Nutzfahrzeug, insbesondere ein Sattelauflieger, mit einem zuvor beschriebenen Nutzfahrzeugaufbau offenbart und beansprucht.

Die Erfindung wird im Folgenden anhand eines Ausführungsbeispiels unter Bezugnahme auf die beigefügten, schematischen Zeichnungen näher erläutert.

Darin zeigen
- Figur 1: eine Querschnittsansicht durch den Bereich eines Dachlängsträgers eines erfindungsgemäßen Nutzfahrzeugaufbaus nach einem bevorzugten Ausführungsbeispiel;
- Figuren 2 bis 4: jeweils eine Draufsicht eines erfindungsgemäßen Nutzfahrzeugaufbaus nach einem weiteren bevorzugten Ausführungsbeispiel; und
- Figur 5: eine Querschnittsansicht einer Dachplaneneinheit mit einem Aussteifungselement.

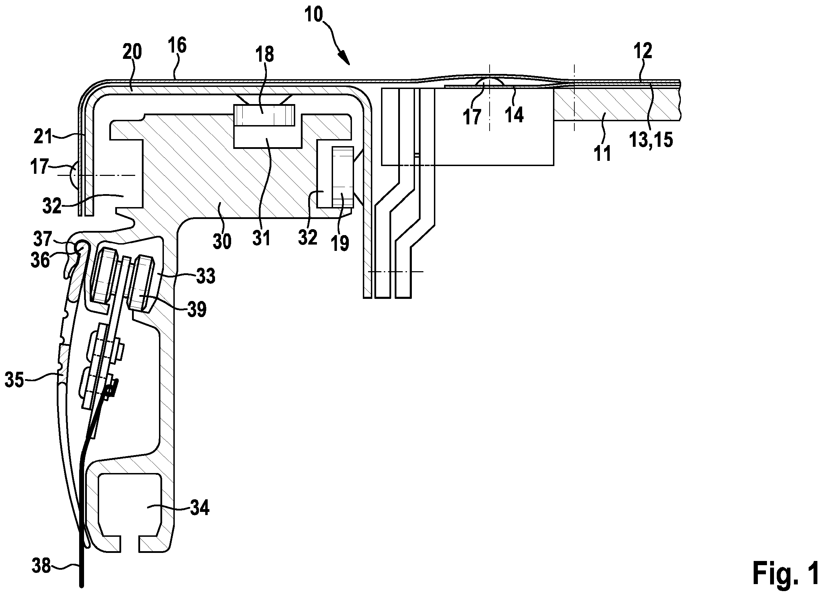

In der Querschnittsansicht gemäß Figur 1 ist ausschnittsweise ein Nutzfahrzeugaufbau mit einem Schiebeverdeck 10 gezeigt. Im Wesentlichen ist ein oberer Eckenbereich zwischen einer Dachfläche und einer Seitenfläche des Nutzfahrzeugaufbaus im Querschnitt dargestellt. Im Allgemeinen weist der Nutzfahrzeugaufbau einen Ladeboden und ein Dach auf, wobei das Dach über Eckrungen abgestützt ist, die mit dem Ladeboden bzw. einem Außenrahmen des Nutzfahrzeugaufbaus verbunden sind. Das Dach umfasst wenigstens zwei Dachlängsträger 30, die mehrere Führungsschienen für einerseits das Schiebeverdeck 10 und andererseits eine Seitenplane 38 sowie Schieberungen aufweist.

Konkret weist der Dachlängsträger 3 ein im Wesentlichen L-förmiges Querschnittsprofil auf. In einem vertikalen Schenkel des Dachlängsträgers 30 sind eine Seitenplanenführungsschiene 33 und eine Rungenführungsschiene 34 angeordnet. Die Rungenführungsschiene 34 dient zur Aufnahme von Schieberungen (nicht dargestellt). In der Seitenplanenführungsschiene 33, die oberhalb der Rungenführungsschiene 34 angeordnet ist, ist bei dem Ausführungsbeispiel gemäß Figur 1 eine Seitenplanenrolle 39 geführt, die mit einer Seitenplane 38 verbunden ist. Die Seitenplane 38 bildet eine seitliche Laderaumbegrenzung des Nutzfahrzeugaufbaus.

Im Bereich des vertikalen Schenkels des Dachlängsträgers 30 ist außerdem ein Dichtungselement 35 vorgesehen. Das Dichtungselement 35 weist einen Keder 36 auf, der in einer Kederaufnahme 37 des Dachlängsträgers 30 gehalten ist. Das Dichtungselement 35 überdeckt den Bereich zwischen der Seitenplanenführungsschiene 33 und der Rungenführungsschiene 34 und liegt an einer Außenseite der Seitenplane 38 an. Das Dichtungselement 35 dichtet somit den Nutzfahrzeugaufbau ab.

Im horizontalen Schenkel des Dachlängsträgers 30 sind eine Seitenführungsschiene 31 sowie Höhenführungsschienen 32 ausgebildet. Die Seitenführungsschiene 31 ist auf einer Oberseite des Dachlängsträgers 30 angeordnet. Die Höhenführungsschienen 32 sind jeweils seitlich, einerseits zur Außenseite und andererseits zur Innenseite gerichtet, im horizontalen Schenkel des Dachlängsträgers 30 vorgesehen. Die Höhenführungsschienen 32 dienen zur Aufnahme von Höhenführungsrollen 19 des Schiebeverdecks 10, wobei die Höhenführungsrolle 19 alternativ in die äußere Höhenführungsschiene 32 oder die innere Höhenführungsschiene 32 eingreifen kann. Die Gestaltung des Dachlängsträgers 30 mit zwei Höhenführungsschienen 32 ermöglicht es insbesondere, unterschiedliche Schiebeverdecke am Dachlängsträger 30 anzuordnen.

Die Seitenführungsschiene 31 nimmt eine Seitenführungsrolle 18 auf, die dem Schiebeverdeck 10 zugeordnet ist. Die Seitenführungsrolle 18 rollt in der Seitenführungsschiene 31 ab und begrenzt eine seitliche Bewegung des Schiebeverdecks 10.

Die Seitenführungsrolle 18 und die Höhenführungsrolle 19 sind jeweils an einem Führungsschlitten 20 des Schiebeverdecks 10 gelagert. Der Führungsschlitten 20 weist im Wesentlichen einen U-förmigen Querschnitt auf und umgreift den horizontalen Schenkel des Dachlängsträgers 30. Bei Ausführungsformen des Schiebeverdecks 10, bei welchen die Höhenführungsrolle 19 in eine außenseitige Höhenführungsschiene 32 des Dachlängsträgers 30 eingreift, kann der Führungsschlitten 20 auch L-förmig ausgebildet sein. Insbesondere kann in diesem Fall auf den inneren vertikalen Schenkel des U-förmigen Querschnittsprofils verzichtet werden.

Mit dem Führungsschlitten 20 ist wenigstens ein Dachspriegel 11 verbunden. Der Dachspriegel 11 erstreckt sich zwischen den beiden Dachlängsträgern 30 in Querrichtung zur Fahrzeuglängsrichtung. Insbesondere erstreckt sich der Dachspriegel 11 senkrecht zur Fahrzeuglängsrichtung zwischen den beiden Dachlängsträgern 30. Vorzugsweise sind mehrere Dachspriegel 11 vorgesehen, die im geschlossenen Zustand des Schiebeverdecks 10 zueinander beabstandet angeordnet sind. Jedem Dachspriegel 11 sind zwei Führungsschlitten 20 zugeordnet, die an gegenüberliegenden Dachlängsträgern 30 geführt sind.

Über den Dachspriegel 11 bzw. die mehreren Dachspriegel 11 ist eine Dachplane 12 gespannt. Die Dachplane 12 erstreckt sich seitlich bis über die Führungsschlitten 20 hinaus und ist vorzugsweise an einer Außenseite 21 des Führungsschlittens 20 mit diesen fest verbunden. Wie in Figur 1 gut erkennbar ist, überlappt die Dachplane 12 den Führungsschlitten 20 und ist zu einer Außenseite 21 des Führungsschlittens 20 umgeschlagen. Konkret weist die Dachplane 12 einen Randbereich 16 auf, der den Führungsschlitten 20 überlappt. Der Randbereich 16 ist auf der Außenseite 21, also im Bereich eines äußeren vertikalen Schenkels, des Führungsschlittens 20 mit diesem durch ein Befestigungsmittel 17 fest verbunden. Das Befestigungsmittel 17 ist vorzugsweise ein Niet, kann jedoch auch durch eine Schraube bzw. eine Kombination aus einer Schraube und einer Mutter realisiert werden.

In Figur 1 ist ebenfalls erkennbar, dass das Schiebeverdeck 10 ferner ein Aussteifungselement 13 aufweist. Das Aussteifungselement 13 ist gemäß Figur 1 durch einen Gurt gebildet ist.

Das Aussteifungselement 13 erstreckt sich auf einer Innenseite der Dachplane 12 und ist abschnittsweise mit der Dachplane 12 verbunden. Insbesondere ist bei dem Ausführungsbeispiel gemäß Figur 1 vorgesehen, dass das Aussteifungselement 13 direkt und fest mit der Dachplane 12 verbunden ist, insbesondere verschweißt.

Das Aussteifungselement 13 weist konkret einen Verbindungsbereich 15 auf, der sich zwischen zwei freien Längsenden 14 erstreckt. Der Verbindungsbereich 15 ist fest mit der Dachplane 12 verbunden, insbesondere verschweißt. Es ist alternativ möglich, dass die Dachplane 12 auf ihrer Innenseite Dachplanentaschen aufweist, durch die sich der Verbindungsbereich 15 des Aussteifungselements 13 erstreckt. Das Aussteifungselement 13 kann in der Dachplanentasche verschieblich angeordnet sein, ist jedoch mittels der Dachplanentasche insgesamt fest mit der Dachplane 12 verbunden.

Vorzugsweise umfasst das Aussteifungselement 13 zwei freie Längsenden, die jeweils mit einem Dachspriegel 11 fest verbunden sind. Dabei können die freien Längsenden 14 eines Aussteifungselements 13 mit demselben Dachspriegel 11 oder unterschiedlichen Dachspriegeln 11 verbunden sein.

Das freie Längsende 14 des Aussteifungselements 13 ist mit der Dachplane 12 nicht verbunden. Vielmehr liegt die Dachplane 12 auf dem freien Längsende 14 lose auf. Das freie Längsende 14 ist durch ein Befestigungsmittel 17 mit dem Dachspriegel 11 fest verbunden. Das Befestigungsmittel 17 ist vorzugsweise als Niet oder Schraube oder als Kombination aus einer Schraube und einer Mutter ausgebildet.

Wie in Figur 1 gezeigt ist, erstreckt sich der Randbereich 16 der Dachplane 12 über das freie Längsende 14 und das Befestigungsmittel 17 hinaus. Insbesondere überlappt der Randbereich 16 der Dachplane 12 das freie Längsende 14 des Aussteifungselements 13. Dabei überdeckt der Randbereich 16 der Dachplane auch das Befestigungsmittel 17 und schützt dieses somit vor dem Eindringen von Feuchtigkeit. Insgesamt ist erkennbar, dass das so gestaltete Schiebeverdeck 10 eine besonders gute Dichtigkeit aufweist.

In Figur 1 ist außerdem gut ersichtlich, dass das Aussteifungselement 13 sich nicht bis zum Führungsschlitten 20 erstreckt. Vielmehr ist der Führungsschlitten 20 nur durch die Dachplane 12 überdeckt. Damit ist der Bereich, in welchem sich die Dachplane 12 beim Öffnen des Schiebeverdecks falten soll, nicht zusätzlich verstärkt. Im Ergebnis lässt sich damit eine Faltung der Dachplane 12 beim Öffnen des Schiebeverdecks 10 mit geringerem Kraftaufwand realisieren. Die Funktionalität des Schiebeverdecks 10 wird somit verbessert. Im Allgemeinen gilt, dass das Schiebeverdeck 10 vorzugsweise mehrere Aussteifungselemente 13 aufweist, die sich jeweils zumindest teilweise in Querrichtung zur Planenlängsrichtung der Dachplane 12 erstrecken. Im Wesentlichen soll damit bezweckt werden, dass Zugkräfte, die zwischen den Dachlängsträgern 30 entstehen, durch die Aussteifungselemente 13 weitergeleitet bzw. aufgenommen werden.

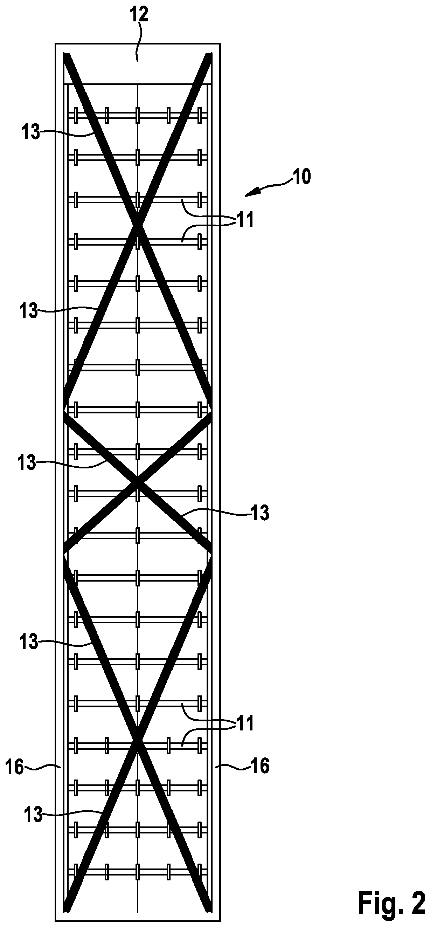

Vorzugsweise erstrecken sich zumindest einige Aussteifungselemente 13 des Schiebeverdecks 10 diagonal. Andere Aussteifungselemente 13 können sich quer, also senkrecht zu den Dachlängsträgern 30, erstrecken. Insgesamt ist es vorteilhaft, wenn die Aussteifungselemente 13 das geschlossene Schiebeverdeck 10 im Wesentlichen fachwerkartig durchziehen. Beispielhafte Anordnungen von Aussteifungselementen 13 sind in den Figuren 2 bis 4 gezeigt.

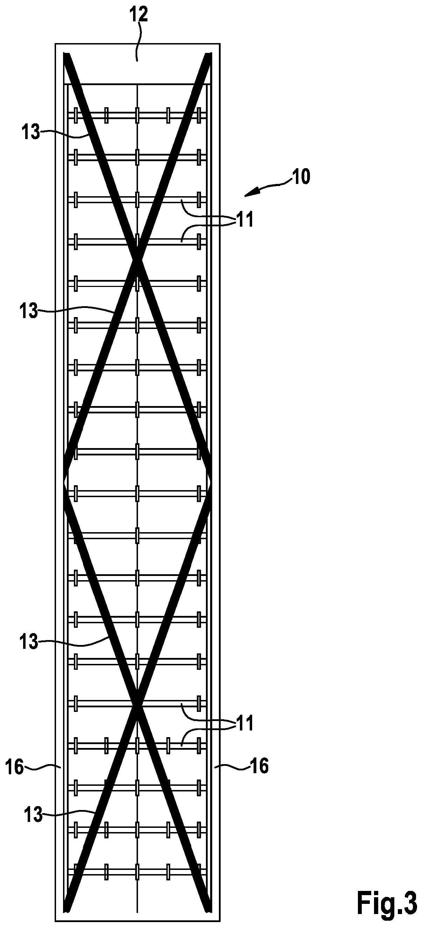

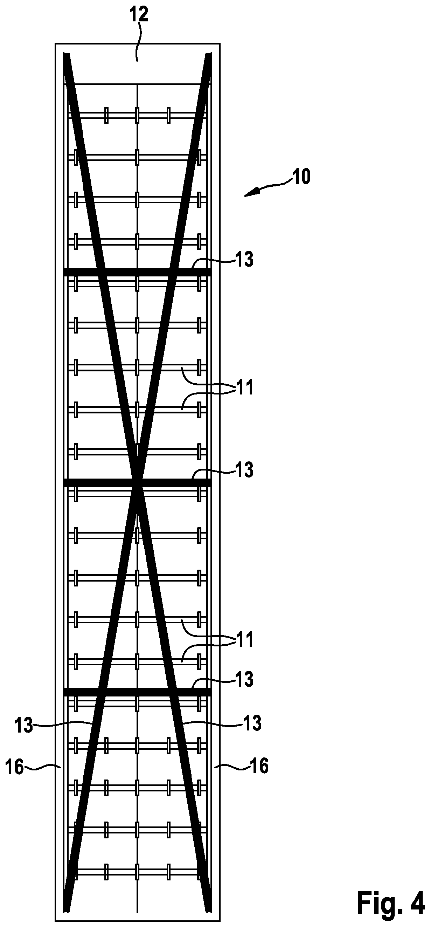

Bei dem Ausführungsbeispiel gemäß Figur 2 sind insgesamt sechs Aussteifungselemente 13 vorgesehen, die sich jeweils diagonal und kreuzend über das geschlossene Schiebeverdeck erstrecken. Bei dem Ausführungsbeispiel gemäß Figur 3 sind lediglich vier Aussteifungselemente vorgesehen, wobei jeweils zwei Aussteifungselemente 13 gegenläufig diagonal angeordnet sind und sich kreuzen. Bei dem Ausführungsbeispiel gemäß Figur 4 sind zwei Aussteifungselemente 13 vorgesehen, die sich diagonal über das Schiebeverdeck 10 erstrecken und sich kreuzen. Ferner sind drei weitere Aussteifungselemente vorgesehen, die in regelmäßigen Abständen senkrecht zu den Dachlängsträgern 30 bzw. zur planen Längsrichtung angeordnet sind.

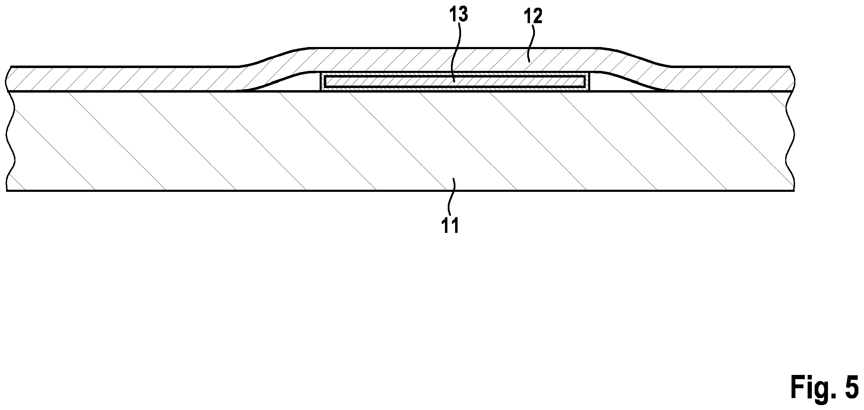

Figur 5 zeigt anschaulich einen Querschnitt durch eine Dachplaneneinheit mit einer Dachplane 12 und einem Aussteifungselement 13. Das Aussteifungselement 13 ist als Gurt ausgebildet und mit der Dachplane 12 stoffschlüssig verbunden, insbesondere verschweißt. Die Dachplaneneinheit liegt auf einem Dachspriegel 11 auf. Da das Aussteifungselement 13 auf einer Innenseite der Dachplane 12 angeordnet ist, wölbt sich die Dachplane 12 im Bereich des Aussteifungselements 13 nach außen auf. Diese leichte Aufweitung beeinträchtigt jedoch die Funktionalität des Schiebeverdecks 10 nicht.

### Bezugszeichenliste

- 10: Schiebeverdeck
- 11: Dachspriegel
- 12: Dachplane
- 13: Aussteifungselement
- 14: Freies Längsende
- 15: Verbindungsbereich
- 16: Randbereich
- 17: Befestigungsmittel
- 18: Seitenführungsrolle
- 19: Höhenführungsrolle
- 20: Führungsschlitten
- 21: Außenseite
- 30: Dachlängsträger
- 31: Seitenführungsschiene
- 32: Höhenführungsschiene
- 33: Seitenplanenführungsschiene
- 34: Rungenführungsschiene
- 35: Dichtungselement
- 36: Keder
- 37: Kederaufnahme
- 38: Seitenplane
- 39: Seitenplanenrolle

## Patentansprüche

1. Nutzfahrzeugaufbau, insbesondere Planenaufbau, mit einem Schiebeverdeck (10), das eine an Dachspriegeln (11) befestigte Dachplane (12) und wenigstens ein Aussteifungselement (13) aufweist, das sich zumindest teilweise quer zur einer Planenlängsrichtung erstreckt, wobei das Aussteifungselement (13) abschnittsweise mit der Dachplane (12) verbunden ist und wenigstens ein freies Längsende (14) aufweist, das mit einem Befestigungsmittel (17) an einer Oberseite eines Dachspriegels (11) fixiert ist,
**dadurch gekennzeichnet, dass**
das Aussteifungselement (13) als Gurt ausgebildet ist und dass ein Randbereich (16) der Dachplane (12) das Befestigungsmittel (17) überdeckt und das freie Längsende (14) des Aussteifungselements (13) lose überlappt, wobei der Randbereich (16) der Dachplane (12) weiter außen als das freie Längsende (14) des Aussteifungselements (13) an einem Führungsschlitten (20) für den Dachspriegel (11) befestigt ist.

2. Nutzfahrzeugaufbau nach Anspruch 1,
**dadurch gekennzeichnet, dass**
das Aussteifungselement (13) auf einer Innenseite der Dachplane (12) angeordnet ist.

3. Nutzfahrzeugaufbau nach Anspruch 1 oder 2,
**dadurch gekennzeichnet, dass**
der Randbereich (16) der Dachplane (12) an einer Außenseite '(21) des Führungsschlittens (20) befestigt ist.

4. Nutzfahrzeugaufbau nach einem der vorhergehenden Ansprüche,
**dadurch gekennzeichnet, dass**
das Aussteifungselement (13) einen Verbindungsbereich (15) aufweist, der sich zwischen zwei freien Längsenden (14) des Aussteifungselements (13) erstreckt und zumindest teilweise, insbesondere abschnittsweise, mittelbar oder unmittelbar mit der Dachplane (12) verbunden ist.

5. Nutzfahrzeugaufbau nach Anspruch 4,
**dadurch gekennzeichnet, dass**
der Verbindungsbereich (15) zumindest teilweise, insbesondere abschnittsweise, stoffschlüssig mit der Dachplane (12) verbunden ist, insbesondere durch Schweißen oder Kleben.

6. Nutzfahrzeugaufbau nach Anspruch 4 oder 5,
**dadurch gekennzeichnet, dass**
der Verbindungsbereich (15) in einer Dachplanentasche geführt ist, die mit der Dachplane (12) fest verbunden, insbesondere geklebt, geschweißt und/oder genäht ist.

7. Nutzfahrzeugaufbau nach einem der vorhergehenden Ansprüche,
**dadurch gekennzeichnet, dass**
mehrere Aussteifungselemente (13) fachwerkartig angeordnet sind.

8. Nutzfahrzeugaufbau nach einem der vorhergehenden Ansprüche,
**dadurch gekennzeichnet, dass**
der Randbereich (16) der Dachplane (12) frei von Aussteifungselementen (13) ist.

9. Nutzfahrzeug, insbesondere Sattelauflieger, mit einem Nutzfahrzeugaufbau nach einem der vorhergehenden Ansprüche.

## Claims

1. A commercial vehicle structure, in particular tarpaulin structure, having a sliding cover (10) which has a roof tarpaulin (12), which is fastened to roof bows (11), and at least one stiffening element (13), which extends at least partially transversely to a tarpaulin longitudinal direction, the stiffening element (13) being connected in some sections to the roof tarpaulin (12) and having at least one free longitudinal end (14) which is fixed to an upper side of a roof bow (11) using a fastening means (17),
**characterised in that**
the stiffening element (13) is in the form of a belt, and an edge region (16) of the roof tarpaulin (12) covers the fastening means (17) and loosely overlaps the free longitudinal end (14) of the stiffening element (13), wherein the edge region (16) of the roof tarpaulin (12) is fastened to a guide carriage (20) for the roof bow (11) further outwards than the free longitudinal end (14) of the stiffening element (13).

2. The commercial vehicle structure according to Claim 1, **characterised in that**
the stiffening element (13) is situated on an inner side of the roof tarpaulin (12).

3. The commercial vehicle structure according to Claim 1 or 2,
**characterised in that**
the edge region (16) of the roof tarpaulin (12) is fastened to an outer side (21) of the guide carriage (20) .

4. The commercial vehicle structure according to any one of the preceding claims,
**characterised in that**
the stiffening element (13) has a connection region (15), which extends between two free longitudinal ends (14) of the stiffening element (13) and is connected at least partially, in particular in some sections, directly or indirectly to the roof tarpaulin (12).

5. The commercial vehicle structure according to Claim 4, **characterised in that**
the connection region (15) is integrally bonded, in particular by welding or adhesive bonding, at least partially, in particular in some sections, to the roof tarpaulin (12).

6. The commercial vehicle structure according to Claim 4 or 5,
**characterised in that**
the connection region (15) is guided in a roof tarpaulin pocket, which is fixedly connected, in particular adhesively bonded, welded and/or stitched, to the roof tarpaulin (12).

7. The commercial vehicle structure according to any one of the preceding claims,
**characterised in that**
multiple stiffening elements (13) are arranged in a framework-like manner.

8. The commercial vehicle structure according to any one of the preceding claims,
**characterised in that**
the edge region (16) of the roof tarpaulin (12) is free of stiffening elements (13).

9. A commercial vehicle, in particular a semi-trailer, having a commercial vehicle structure according to any one of the preceding claims.

## Revendications

1. Structure de véhicule utilitaire, notamment structure à bâche, dotée d'un toit coulissant (10), qui comporte une bâche de toit (12) fixée sur des arceaux de toit (11) et au moins un élément de renfort (13), qui s'étend au moins en partie à la transversale d'une direction longitudinale de la bâche,
l'élément de renfort (13) étant relié par segments avec la bâche de toit (12) et comportant au moins une extrémité longitudinale (14) libre, qui par un moyen de fixation (17) est fixée sur une face supérieure d'un arceau de toit (11),
**caractérisée en ce que** l'élément de renfort (13) est conçu sous la forme d'une sangle et **en ce qu'**une zone de bordure (16) de la bâche de toit (12) recouvre le moyen de fixation (17) et chevauche de manière lâche l'extrémité longitudinale (14) libre de l'élément de renfort (13), la zone de bordure (16) de la bâche de toit (12) étant fixée plus à l'extérieur en tant que l'extrémité longitudinale (14) libre de l'élément de renfort (13) sur un chariot de guidage (20) pour l'arceau de toit (11).

2. Structure de véhicule utilitaire selon la revendication 1,
**caractérisée en ce que**
l'élément de renfort (13) est placé sur une face interne de la bâche de toit (12).

3. Structure de véhicule utilitaire selon la revendication 1 ou 2, **caractérisée en ce que**
la zone de bordure (16) de la bâche de toit (12) est fixée sur une face externe (21) du chariot de guidage (20) .

4. Structure de véhicule utilitaire selon l'une quelconque des revendications précédentes, **caractérisée en ce que**
l'élément de renfort (13) comporte une zone de liaison (15), qui s'étend entre deux extrémités longitudinales (14) libres de l'élément de renfort (13) et qui est reliée au moins en partie, notamment par segments, indirectement ou directement avec la bâche de toit (12) .

5. Structure de véhicule utilitaire selon la revendication 4,
**caractérisée en ce que**
la zone de liaison (15) est reliée au moins en partie, notamment par segments, par conjugaison de matière avec la bâche de toit (12), notamment par soudage ou collage.

6. Structure de véhicule utilitaire selon la revendication 4 ou 5,
**caractérisée en ce que**
la zone de liaison (15) est guidée dans une poche de la bâche de toit qui est solidement reliée, notamment collée, soudée et/ou cousue avec la bâche de toit (12) .

7. Structure de véhicule utilitaire selon l'une quelconque des revendications précédentes, **caractérisée en ce que** plusieurs éléments de renfort (13) sont placés à la manière d'un treillis.

8. Structure de véhicule utilitaire selon l'une quelconque des revendications précédentes, **caractérisée en ce que**
la zone de bordure (16) de la bâche de toit (12) est exempte d'éléments de renfort (13).

9. Véhicule utilitaire, notamment semi-remorque, dotée d'une structure de véhicule utilitaire selon l'une quelconque des revendications précédentes.
